# EUROPÄISCHE PATENTSCHRIFT

(11) **EP 3 605 032 B1**
(45) Veröffentlichungstag und Bekanntmachung des Hinweises auf die Patenterteilung: **02.06.2021**
(21) Anmeldenummer: 18187126.0
(22) Anmeldetag: 02.08.2018
(51) Int. Cl.: G01F 23/284, G01S 7/03, H01Q 1/00, H01Q 1/22, G01S 7/02

(54) **RADARSENSOR ZUR FÜLLSTAND- ODER GRENZSTANDMESSUNG**
RADAR SENSOR FOR FILL LEVEL OR LIMIT LEVEL DETERMINATION
CAPTEUR RADAR DESTINÉ À LA MESURE DE NIVEAU DE REMPLISSAGE OU DE NIVEAU LIMITE

(43) Veröffentlichungstag der Anmeldung: 05.02.2020
(73) Patentinhaber: VEGA Grieshaber KG, 77709 Wolfach (DE)
(72) Erfinder: DIETERLE, Levin, 77709 Oberwolfach (DE)
(74) Vertreter: Maiwald Patent- und Rechtsanwaltsgesellschaft mbH

(56) Entgegenhaltungen:
- EP-A1- 1 493 003
- WO-A1-2010/144936
- WO-A1-2017/174135
- FR-A1- 2 744 934
- GB-A- 2 521 136
- US-A- 5 730 025
- US-A1- 2013 009 803
- US-A1- 2014 047 917

## Beschreibung

### Gebiet der Erfindung

Die Erfindung betrifft allgemein das Gebiet der Prozessautomation. Im Speziellen betrifft die Erfindung einen Radarsensor zur Messung eines Füllstandes und/oder Grenzstandes eines Füllgutes in einem Behälter.

### Technologischer Hintergrund

Füllstandmessgeräte werden allgemein dazu verwendet, um den Füllstand eines Füllgutes in einem Behälter oder eines Schüttguts auf einer Schüttguthalde zu messen. Radarbasierte Füllstandmessgeräte senden Radarsignale in Richtung der Oberfläche des Füllguts oder des Schüttguts aus, wobei ein Teil des Radarsignals an der Oberfläche reflektiert und von dem Füllstandmessgerät empfangen werden kann. Die Laufzeit des Radarsignals von dem Radarsensor zur Oberfläche und zurück ist dabei proportional zur Länge des zurückgelegten Wegs, so dass sich basierend auf der Laufzeit der Füllstand bestimmen lässt. Bei radarbasierten Grenzstandmessgeräten wird in der Regel das Erreichen eines gewissen Füllstandes und/oder Grenzstandes des in dem Behälter befindlichen Mediums ermittelt.

Zum Abstrahlen und/oder Empfangen des Radarsignals weisen Füllstand- und/oder Grenzstandmessgeräte in der Regel eine Antenne auf. Die Füllstand- und/oder Grenzstandmessgeräte werden dabei häufig derart an den Behältern angebracht, dass die Antenne in das Behälterinnere ragt. Dies erfordert regelmäßig eine aufwändige Befestigung des Radarsensors am Behälter sowie eine geeignete Abdichtung der Befestigungsstelle. Auch können Radarsensoren, insbesondere die zugehörigen Antennen, in einem gewissen Abstand zu dem Behälter verbaut werden. Hierbei kann es jedoch durch Umwelteinflüsse, wie beispielsweise Feuchtigkeit auf dem Behälter, zu Störeinflüssen bzw. einer Störung der Messung kommen.

Dokument EP 1 493 003 B1 betrifft ein Füllstandmessgerät, dessen Antenne und Elektronik zumindest teilweise in einem Gehäuse angeordnet ist.

### Zusammenfassung der Erfindung

Mit Ausführungsformen der Erfindung kann in vorteilhafter Weise ein verbesserter Radarsensor zur Füllstand- und/oder Grenzstandmessung bereitgestellt werden. Der erfindungsgemäße Radarsensor kann sich dabei insbesondere durch eine kompakte Bauform, eine Robustheit, Langlebigkeit sowie eine erhöhte Messgenauigkeit auszeichnen.

Dies wird durch den Gegenstand des unabhängigen Patentanspruchs 1 ermöglicht. Weiterbildungen der Erfindung ergeben sich aus den Unteransprüchen und der nachfolgenden Beschreibung.

Ein Aspekt der Erfindung betrifft einen Radarsensor zur Messung eines Füllstandes und/oder Grenzstandes eines Füllgutes und/oder Mediums in einem Behälter. Bei dem Behälter handelt es sich beispielsweise um einen Kunststoffbehälter, der zumindest teilweise für das Radarsignal des Radarsensors transparent ist. Das Medium kann etwa eine Flüssigkeit und/oder ein Schüttgut sein. Der Radarsensor weist eine Sensoreinheit, eine Sensorschaltung und/oder einen Sensor zum Abstrahlen und/oder Empfangen eines Radarsignals auf. Ferner weist der Radarsensor eine Auswerteeinheit zum Ermitteln, basierend auf dem Radarsignal und/oder basierend auf einer Laufzeit des Radarsignals zwischen Abstrahlen und Empfangen des Radarsignals, eines mit dem Füllstand und/oder dem Grenzstand korrelierenden Messsignals auf. Weiter weist der Radarsensor ein Gehäuse mit wenigstens einem Gehäusebereich auf, welcher dazu ausgebildet ist, zur Messung des Füllstandes und/oder des Grenzstandes gegenüberliegend zu einer Behälterwand des Behälters angeordnet zu werden. Mit anderen Worten kann der Radarsensor derart ausgebildet sein, dass er außen an der Behälterwand des Behälters angebracht werden kann, so dass der Gehäusebereich der Behälterwand gegenüberliegt. Der Gehäusebereich und/oder das Gehäuse ist dabei derart ausgebildet ist, dass das Radarsignal durch den Gehäusebereich und/oder durch das Gehäuse hindurch transmittierbar ist. Außenseitig an dem Gehäuse ist zumindest entlang eines Teils eines Außenumfangs des Gehäusebereichs und/oder in zumindest einen Teilbereich des Gehäuses, in welchem etwa der Gehäusebereich angeordnet ist, eine Klebefläche mit einem Klebematerial angeordnet, welche zur Anbringung des Radarsensors an der Behälterwand des Behälters ausgebildet ist, insbesondere so dass der Gehäusebereich und/oder der Teilbereich des Gehäuses gegenüberliegend zur Behälterwand angeordnet ist. Der Außenumfang kann beispielsweise einen Bereich des Gehäuses um den Gehäusebereich herum bezeichnen. Mit anderen Worten kann die Klebefläche um den Gehäusebereich herum angeordnet sein. Dabei kann die Klebefläche an den Gehäusebereich heranragen, mit diesem in Kontakt stehen und/oder zumindest teilweise in dem Gehäusebereich ausgebildet sein. Nicht erfindungsgemäß kann die Klebefläche von dem Gehäusebereich und/oder zumindest einem Teil davon beabstandet sein. Ferner ist außenseitig an dem Gehäuse zumindest entlang eines Teils des Außenumfangs des Gehäusebereichs und/oder in zumindest einem Teilbereich des Gehäuses, in welchem etwa der Gehäusebereich angeordnet ist, eine Dichtfläche mit einem Dichtmaterial angeordnet, welche dazu ausgebildet ist, den Gehäusebereich bei Anbringung des Radarsensors an der Behälterwand zumindest teilweise abzudichten. Der Außenumfang kann beispielsweise einen Bereich um den Gehäusebereich herum bezeichnen. Dabei kann die Dichtfläche an den Gehäusebereich heranragen, mit diesem in Kontakt stehen und/oder zumindest teilweise in dem Gehäusebereich ausgebildet sein. Nicht erfindungsgemäß kann die Dichtfläche von dem Gehäusebereich und/oder zumindest einem Teil davon beabstandet sein. Alternativ oder zusätzlich kann die Dichtfläche dazu ausgebildet sein, einen Bereich zwischen der Behälterwand und dem Gehäusebereich zumindest teilweise abzudichten und/oder gegenüber Umwelteinflüssen zu schützen. Der Außenumfang und/oder Teilbereich, in welchem die Klebefläche angeordnet ist, kann identisch oder verschieden zu dem Außenumfang und/oder Teilbereich sein, in welchem die Dichtfläche angeordnet ist.

Durch die Klebefläche mit dem Klebematerial kann der Radarsensor zum einen zuverlässig und dauerhaft an der Behälterwand des Behälters angeordnet, angebracht und/oder befestigt werden, ohne dass hierzu eine weitere Befestigungsvorrichtung, etwa ein Flansch, an dem Radarsensor notwendig ist und/oder ohne dass eine Anpassung des Behälters notwendig ist. Zum anderen kann durch die Dichtfläche mit dem Dichtmaterial der Gehäusebereich des Gehäuses, durch welchen hindurch das Radarsignal transmittiert wird, und/oder der Bereich zwischen Gehäuse und Behälterwand zuverlässig gegen Umwelteinflüsse, wie etwa ein Eindringen von Feuchtigkeit oder dergleichen, geschützt werden. Hierdurch können Störungen und/oder Störeinflüsse, die die Messung beeinträchtigen können, vermieden werden. Insgesamt kann auf diese Weise ein kompakter, zuverlässiger und robuster Radarsensor bereitgestellt werden.

Der Gehäusebereich kann allgemein einen Teil des Gehäuses, etwa ein Teil einer Gehäusefläche, eine Gehäusefläche, eine Gehäuseseite, ein Teil einer Gehäuseseite, ein Teil einer Gehäusewandung und/oder eine Gehäusewandung bezeichnen. Durch den Gehäusebereich kann das Radarsignal abgestrahlt und/oder empfangen werden. Gleichsam kann der Gehäusebereich einen Abstrahlbereich und/oder Empfangsbereich des Gehäuses, des Radarsensors und/oder der Antenne bezeichnen. Der Gehäusebereich und/oder eine Gehäusewandung im Gehäusebereich kann beispielsweise eine Wandstärke und/oder Dicke von beispielsweise rund 1 mm bis 5 mm aufweisen. Ein Wandstärke des Gehäusebereichs kann geringer sein als eine Wandstärke eines anderen Teilbereichs des Gehäuses.

Die Sensoreinheit des Radarsensors ist dazu ausgeführt, das Radarsignal durch das Gehäuse hindurch, erfindungsgemäß durch den Gehäusebereich hindurch, abzustrahlen und/oder zu empfangen. Das Radarsignal kann allgemein ein Sendesignal, welches von dem Radarsensor und/oder der Sensoreinheit in Richtung des Füllguts abgestrahlt werden kann und ein Empfangssignal, welches an dem Füllgut reflektiert und von der Sensoreinheit empfangen werden kann, bezeichnen. Das Empfangssignal kann dabei den vom Füllgut reflektierten Teil des Sendesignals bezeichnen. Gleichsam kann die Sensoreinheit zum Abstrahlen des Sendesignals in Richtung des Füllguts und/oder zum Empfangen des an dem Füllgut reflektierten Empfangssignals eingerichtet sein. Dazu kann die Sensoreinheit eine Antenne aufweisen. Beispielsweise kann eine Parabolantenne, eine Hornantenne, eine Cassegrain-Antenne oder eine Patchantenne verwendet werden. Die Sensoreinheit kann auch eine Antennengruppe aufweisen, und die Richtcharakteristik der Antennengruppe kann adaptiv anpassbar sein, um beispielsweise eine Strahlbündelung zu erzielen.

Die Antenne der Sensoreinheit kann sowohl dazu ausgeführt sein, das Radarsignal und/oder das Sendesignal abzustrahlen als auch das von der Füllgutoberfläche reflektierte Radarsignal und/oder das Empfangssignal zu empfangen. Dazu kann die Sensoreinheit beispielsweise eine Sende-Empfangsweiche (Duplexer) aufweisen, die zur zeitlichen Diskriminierung des Sendesignals und des Empfangssignals ausgeführt und/oder eingerichtet sein kann. Es ist aber auch möglich, dass die Sensoreinheit unterschiedliche Antennen für das Senden und das Empfangen des Radarsignals aufweist.

Die Auswerteeinheit kann allgemein eine Auswerteelektronik, eine elektronische Auswerteeinheit und/oder eine Auswerteschaltung bezeichnen. Die Auswerteeinheit ist dazu eingerichtet, basierend auf der Laufzeit und/oder basierend auf einer Laufzeitmessung zwischen Abstrahlen und Empfangen des Radarsignals ein mit dem Füllstand und/oder dem Grenzstand korrelierendes Messsignal zu bestimmen und/oder zu ermitteln. Das Messsignal kann dabei wenigstens einen beliebigen mit dem Grenzstand und/oder dem Füllstand korrelierenden Parameter bezeichnen. Das Messsignal und/oder der wenigstens eine Parameter kann insbesondere repräsentativ und/oder indikativ für die Laufzeit zwischen dem Abstrahlen des Radarsignals und dem Empfangen des von der Füllgutoberfläche reflektierten Radarsignals, für den Füllstand des Füllgutes in dem Behälter, für den Grenzstand des Füllguts, für ein Erreichen des Grenzstandes und/oder für das Überschreiten eines Füllstandes oder Grenzstandes sein.

Zur Bestimmung des Messsignals kann die Auswerteeinheit sowohl analoge als auch digitale Signalverarbeitungsverfahren verwenden. Dementsprechend kann die Auswerteeinheit beispielsweise einen Verstärker, Tiefpassfilter, Frequenzmischer und/oder Bandpassfilter für die analoge Signalverarbeitung aufweisen. Ferner kann die Auswerteeinheit einen oder mehrere Analog-Digital-Wandler aufweisen, die analoge Signale abtasten und quantisieren kann. Darüber hinaus kann die Auswerteeinheit wenigstens einen Prozessor für die digitale Signalverarbeitung aufweisen, zum Beispiel einen Mikroprozessor, einen digitalen Signalprozessor oder einen Prozessor mit anwendungsspezifischen Befehlssätzen (application specific instruction set processors - ASIPs). Zudem kann die Auswerteeinheit wenigstens einen dedizierten Speicherbaustein für Daten und/oder Programmcode aufweisen, insbesondere flüchtige oder nichtflüchtige Speicher. Weiterhin kann die elektronische Auswerteeinheit einen anwendungsspezifischen integrierten Schaltkreis (ASICs) aufweisen.

Zusammenfassend wird gemäß dem ersten Aspekt der Erfindung ein Radarsensor bereitgestellt, welcher mittels der Klebefläche und/oder dem Klebematerial außenseitig an der Behälterwand des Behälters angeordnet und/oder angebracht werden kann. Hierzu sind keinerlei Modifikationen an dem Behälter, etwa das Vorsehen eines Durchbruches, notwendig. Dies erlaubt eine kostengünstige Anbringung sowie Nachrüstung an bereits bestehende Behälter. Ferner weist der Radarsensor eine Sensoreinheit auf, welche durch den Gehäusebereich des Gehäuses und durch die Behälterwand hindurch das Radarsignal und/oder das Sendesignal in einen Innenraum des Behälters abstrahlen kann. Das an dem im Behälter befindlichen Medium und/oder dessen Oberfläche reflektierte Radarsignal (und/oder Empfangssignal) wird ebenso durch die Behälterwand und durch den Gehäusebereich des Gehäuses hindurch von der Sensoreinheit empfangen. Der Gehäusebereich und/oder ein Bereich zwischen dem Gehäusebereich und einer Behälterwand ist dabei durch die Dichtfläche, welche insbesondere zumindest teilweise zwischen dem Gehäuse (und/oder dem Gehäusebereich) und der Behälterwand angeordnet ist, gegen Umwelt- und/oder Störeinflüsse abgedichtet.

Die zumindest teilweise umlaufende Klebefläche und/oder die zumindest teilweise umlaufende Dichtfläche grenzt dabei im Wesentlichen den Gehäusebereich (bzw. den Abstrahl- und/oder Empfangsbereich) des durch die Behälterwand messenden Radarsensors von der Umgebung ab. Der Behälter kann dabei grundsätzlich aus jedem beliebigem Material, welches für das Radarsignal zumindest teilweise transparent ist, beispielsweise Kunststoff, etwa High-Density-Polyethylen, HDPE, gefertigt sein. Somit kann beispielsweise einer Bildung von Kondensat und/oder ein Eindringen von unerwünschten Medien, wie beispielsweise Wasser, in den Bereich zwischen der dem Behälter zugewandten Gehäusefläche und/oder dem Gehäusebereich des Radarsensors und der dem Radarsensor zugewandten Behälterfläche (bzw. Behälterwand) verhindert werden. Dringt beispielsweise Wasser in diesen Bereich ein, so könnte dies aufgrund der hohen relativen Permittivität von Wasser zu einer Totalreflexion des emittierten Radarsignals führen. Eine Bestimmung des Füllstandes des Mediums im Behälter wäre in diesem Falle nicht mehr möglich. Durch die erfindungsgemäße Ausgestaltung des Radarsensors können somit Störeinflüsse und/oder Fehlmessungen verhindert werden, die Zuverlässigkeit des Radarsensors kann erhöht und die Einsatzfähigkeit des Radarsensors während seiner gesamten Lebensdauer am Einsatzort, beispielsweise in einer Außenanwendung, kann gewährleistet werden.

Erfindungsgemäß ist daher insbesondere vorgesehen, den Radarsensor an der Behälterwand eines Behälters, etwa einer Wandung eines Kunststoffbehälters, anzubringen und eine Abdichtung des Gehäusebereichs des Gehäuses des Radarsensors, durch welchen das Radarsignal abgestrahlt und/oder empfangen wird, und/oder eines Bereich zwischen dem Gehäusebereich und der Behälterwand gegenüber Umwelteinflüssen vorzunehmen, wobei der Radarsensor durch das Gehäuse des Radarsensors und durch die Behälterwand des Behälters eine Messung des Füllstandes und/oder des Grenzstandes vornehmen kann. Dabei ist die Dichtfläche außenseitig am Gehäuse angeordnet, so dass eine Abdichtung des Gehäusebereichs durch die Dichtfläche außerhalb des Gehäuses und/oder außerhalb der Antenne der Sensoreinheit zwischen der dem Radarsensor zugewandten Behälterwand und dem der Behälterwand zugewandten Gehäusebereich des Radarsensors stattfinden kann.

Es sei an dieser Stelle betont, dass im Kontext der vorliegenden Offenbarung die Dichtfläche durch die Klebefläche bereitgestellt sein kann und umgekehrt. Beispielsweise kann das Klebematerial abdichtende Eigenschaften aufweisen und/oder abdichtend ausgestaltet sein. Analog kann das Dichtmaterial klebende Eigenschaften aufweisen. Mit anderen Worten kann das Klebematerial auch das Dichtmaterial bereitstellen. Alternativ kann die Klebefläche und die Dichtfläche separat ausgestaltet sein und/oder zumindest teilweise unterschiedliche Materialien aufweisen. Der Teil des Außenumfangs des Gehäusebereichs und/oder des Teilbereichs des Gehäuses, in welchem die Klebefläche angeordnet ist, kann somit den Teil des Außenumfangs des Gehäusebereichs und/oder den Teilbereich des Gehäuses bezeichnen, in welchem die Dichtfläche angeordnet ist. Alternativ kann sich der Teil des Außenumfangs bzw. Teilbereichs, in welchem die Klebefläche angeordnet ist, zumindest teilweise von dem Teil des Außenumfangs bzw. Teilbereichs, in welchem die Dichtfläche angeordnet ist, unterscheiden.

Die Klebefläche und/oder die Dichtfläche kann den Gehäusebereich zumindest teilweise, insbesondere vollständig, umlaufen, beispielsweise außenseitig an dem Gehäuse. Alternativ oder zusätzlich kann die Klebefläche und/oder die Dichtfläche zumindest teilweise, insbesondere vollständig, in dem Gehäusebereich (etwa außenseitig an dem Gehäusebereich) ausgebildet sein.

Gemäß einer Ausführungsform der Erfindung umschließt die Klebefläche und/oder die Dichtfläche den Gehäusebereich vollständig entlang des Außenumfangs des Gehäusebereichs und/oder vollständig entlang des Teilbereichs des Gehäuses. Dadurch kann zum einen eine Zuverlässigkeit der Anbringung des Radarsensors am Behälter durch die Klebefläche und zum anderen eine Abdichtung des Gehäusebereichs und/oder des Bereichs zwischen dem Gehäusebereich und der Behälterwand weiter verbessert werden.

Gemäß einer Ausführungsform der Erfindung umläuft die Klebefläche die Dichtfläche zumindest teilweise, insbesondere vollständig, beispielsweise an einem Außenumfang der Dichtfläche.

Gemäß einer Ausführungsform der Erfindung ist die Dichtfläche flächig ausgebildet. Alternativ oder zusätzlich kann die Dichtfläche den Gehäusebereich zumindest teilweise flächig abdecken.

Die Dichtfläche (und/oder das Dichtmaterial) kann gleichsam eine Füllung (und/oder ein Füllmaterial) bezeichnen, welche einen Bereich zwischen dem Gehäusebereich, der Klebefläche und der Behälterwand zumindest teilweise füllt. Auch in einer derartigen Ausgestaltung kann die Klebefläche einstückig mit der Dichtfläche ausgestaltet sein. Alternativ können die Klebefläche und die Dichtfläche mehrteilig ausgeführt sein. Die Klebefläche kann dabei von der Dichtfläche beabstandet sein oder an diese angrenzen.

Beispielsweise kann das Dichtmaterial und/oder das Klebematerial zumindest teilweise eine relative Permittivität von 1,5 bis 3 aufweisen. Dies kann einen Anteil eines in Richtung Radarsensor zurückreflektierten Teil des Radarsignals reduzieren. Dies kann insbesondere die Signalqualität und/oder Trennschärfe von Messungen im Nahbereich des Radarsensors verbessern. Ferner kann eine Blockdistanz, welche einen Nahbereich des Radarsensors, in dem keine Messung möglich ist, bezeichnen kann, im Vergleich zu einem Luftspalt zwischen Radarsensor und Behälterwand verringert werden. Des Weiteren kann ein Abstand von dem dem Behälter zugewandten Gehäusebereich des Radarsensors und der dem Radarsensor zugewandten Behälterwand von einer Dicke der Dicht- und/oder Klebefläche bestimmt sein. Nachdem eine Dicke des Dicht- und/oder Klebematerials vorbestimmt sein kann, kann das Dicht- und/oder Klebematerial (bzw. das dadurch bereitgestellte Füllmaterial) mit seiner Dicke und/oder seinen physikalischen Eigenschaften in einem Antennendesign, etwa zur Gestaltung der Abstrahlcharakteristik, berücksichtigt werden.

Gemäß einer Ausführungsform der Erfindung ist das Dichtmaterial der Dichtfläche durch das Klebematerial der Klebefläche bereitgestellt. Mit anderen Worten kann das Klebematerial identisch zu dem Dichtmaterial sein. Alternativ oder zusätzlich können die Klebefläche und die Dichtfläche einstückig ausgebildet sein. Mit anderen Worten kann es sich bei dem Dichtmaterial und dem Klebematerial um dasselbe Material handeln, welches gleichzeitig eine klebende Eigenschaft zur Befestigung des Radarsensors und eine abdichtende Eigenschaft zur Abdichtung des Gehäusebereichs aufweisen kann.

Gemäß einer Ausführungsform der Erfindung unterscheidet sich das Klebematerial von dem Dichtmaterial. Mit anderen Worten kann es sich bei dem Dichtmaterial und dem Klebematerial um unterschiedliche Materialien und/oder unterschiedliche Materialkombinationen handeln.

Gemäß einer Ausführungsform der Erfindung weist die Klebefläche und/oder die Dichtfläche zumindest teilweise einen Acrylatklebstoff, insbesondere ein Acrylatklebeband, auf. Bei dem Behälter kann es sich beispielsweise um einen Kunststoffbehälter, etwa für Chemikalien, handeln. Diese sind häufig aus High-Density-Polyethylen, HDPE, gefertigt, was ein niederenergetischer Kunststoff ist. An derartigen Materialien kann Acrylatklebstoff eine zuverlässige, dauerhafte und/oder robuste Klebeverbindung ermöglichen. Auch kann ein Acrylatklebstoff den Gehäusebereich zuverlässig abdichten. Acrylatklebstoff kann sich daher besonders gut als Klebematerial und/oder Dichtmaterial eignen. Das Klebematerial und/oder das Dichtmaterial können dabei insbesondere ein Acrylatklebeband, etwa ein doppelseitiges Acylatklebeband und /oder ein geschlossenzelliges Acrylatklebeband, welches sich etwa durch hohe Kleb- und Dichteigenschaften auszeichnen kann, aufwerisen.

Gemäß einer Ausführungsform der Erfindung umschließt und/oder umhüllt das Gehäuse die Sensoreinheit und die Auswerteeinheit vollständig und/oder permanent. Insbesondere umschließt das Gehäuse auch die Antenne der Sensoreinheit. Der Radarsensor kann ferner weitere Komponenten, wie etwa eine Kommunikationseinheit und/oder eine Energieversorgungseinheit, aufweisen, welche ebenso von dem Gehäuse vollständig umschlossen sein können. Das Gehäuse des Radarsensors kann insbesondere derart ausgestaltet sein, dass es nicht geöffnet werden kann. Dadurch wird beispielsweise vermieden, dass durch ein ungewolltes Öffnen des Gehäuses aggressive Gase oder Flüssigkeiten mit der Sensoreinheit, der Auswerteeinheit und/oder anderen Komponenten in Kontakt treten. Das permanent die Sensoreinheit und Auswerteeinheit umhüllende Gehäuse kann somit die Sicherheit und Robustheit des Radarsensors erhöhen.

Gemäß einer weiteren Ausführungsform ist das Gehäuse und/oder der Gehäusebereich des Radarsensors dazu ausgeführt, eine Bündelung des von der Sensoreinheit abgestrahlten Radarsignals zu bewirken. Insbesondere können das Material und die Form des Gehäuses, etwa des Gehäusebereichs, ausgeführt sein, um eine gewünschte Richtcharakteristik des Radarsensors zu erzielen. Beispielsweise kann das Gehäuse und/oder der Gehäusebereich des Radarsensors dazu ausgeführt sein, dass die Hauptkeule der Richtcharakteristik schmaler ist als ein vorgegebener Winkel. Ferner kann das Gehäuse und/oder der Gehäusebereich des Radarsensors dazu ausgeführt sein, dass die Nebenkeulen um einen vorgegebenen Faktor schwächer sind als die Hauptkeule. Alternativ kann das Gehäuse und/oder der Gehäusebereich dazu ausgeführt sein, dass der Anteil der über die Hauptkeule abgestrahlten Energie maximal ist. Eine starke Bündelung des abgestrahlten Radarsignals kann ermöglichen, den Füllstand und/oder Grenzstand auch bei geringen Sendeleistungen des Radarsignals zuverlässig zu schätzen und/oder zu ermitteln. Mit einer stärkeren Bündelung des abgestrahlten Radarsignals kann daher eine Reduktion des Energieverbrauchs erzielt werden. Dadurch kann auch eine Verlängerung der Lebensdauer und/oder eine Betriebsdauer des Radarsensors erreicht werden.

Gemäß einer Ausführungsform der Erfindung ist das Gehäuse vollständig geschlossen. Alternativ oder zusätzlich umschließt und/oder umhüllt das Gehäuse die Sensoreinheit und die Auswerteeinheit hermetisch, insbesondere staubdicht, wasserdicht und/oder luftdicht. Beispielsweise kann das Gehäuse des Radarsensors zum Erreichen der Schutzart IP68 ausgeführt sein, d.h. das Gehäuse des Radarsensors ist staubdicht und bietet Schutz gegen Eindringen von Wasser auch bei dauerndem Untertauchen. Darüber hinaus kann das Gehäuse dazu ausgeführt und/oder ausgebildet sein, das Eindringen von Gasen in das Innere des Gehäuses zu verhindern. Dies kann beispielsweise in Anlagen der chemischen Industrie relevant sein, in denen explosive oder korrodierende Gase auftreten können.

Gemäß einer Ausführungsform der Erfindung ist der Radarsensor nach außen vollständig kabellos ausgeführt. Alternativ oder zusätzlich weist das Gehäuse keine Kabeldurchführung auf. Damit kann der Radarsensor zumindest temporär völlig autark und nicht kabelgebunden betrieben werden. Dies ermöglicht zudem eine effiziente und flexible Anbringung des Radarsensors an einem beliebigen, mitunter auch transportablen, Behälter. Auch kann hierdurch ein Installationsaufwand zur Installation des Radarsensors erheblich verringert werden..

Gemäß einer weiteren Ausführungsform ist das Gehäuse des Radarsensors einstückig aus Kunststoff gespritzt. Ein einstückig aus Kunststoff gespritztes Gehäuse kann besonders vorteilhaft sein, da es keine Verbindungsstellen aufweist, an denen verschiedene Gehäusebauteile miteinander verbunden sind und an denen Undichtigkeiten auftreten könnten. Ein Umspritzen der Sensoreinheit, der Auswerteeinheit und/oder weiterer Komponenten des Radarsensors zur Ausbildung eines einstückigen Gehäuses kann eine sichere und robuste Ausführung des Radarsensors ermöglichen.

Gemäß einer weiteren Ausführungsform umfasst das Gehäuse des Radarsensors mindestens zwei Gehäusebauteile, wobei die mindestens zwei Gehäusebauteile mittels Schweißen und/oder Kleben zusammengefügt sind. Beispielsweise kann das Gehäuse aus zwei Gehäusebauteilen bestehen, welche mittels eines geeigneten Klebers zusammengeklebt oder mittels Ultraschallschweißen zusammengefügt werden, sodass die Fügestelle aus dem aufgeschmolzenen Material der beiden Gehäusebauteile besteht. Vorzugsweise sind die mindestens zwei Gehäusebauteile aus demselben thermoplastischen Kunststoff (beispielsweise Polyethylen oder Polypropylen) gefertigt. Alternativ dazu können die Gehäusebauteile aus unterschiedlichen Materialien hergestellt sein.

Gemäß einer weiteren Ausführungsform ist das Gehäuse des Radarsensors vollständig aus einem thermoplastischen Kunststoff gefertigt. Dies ermöglicht eine kostengünstige Herstellung mittels Spritzguss. Insbesondere ist es vorteilhaft, wenn das Gehäuse aus einem Kunststoff mit geringer relativer Permittivität (1,5-3) wie zum Beispiel Polyethylen oder Polypropylen gefertigt ist. Da die Messung des Radarsensors durch das Gehäuse hindurch erfolgt, reduziert dies das Klingeln der Antenne, verbessert die empfangene Signalqualität im Nahbereich und verringert somit die Blockdistanz des Sensors. Unter der Blockdistanz versteht man die Distanz innerhalb der keine bzw. keine verlässliche Messung/Auswertung der empfangenen Signale möglich ist.

Gemäß einer Ausführungsform der Erfindung weist der Radarsensor ferner eine Kommunikationseinheit auf, welche in dem Gehäuse angeordnet ist und welche dazu eingerichtet ist, das Messsignal und/oder einen mit dem Messsignal korrelierenden Messwert durch das Gehäuse hindurch an einen Empfänger zu übermitteln. Die Kommunikationseinheit des Radarsensors kann dazu eingerichtet sein, das Messsignal, wenigstens einen mit dem Füllstand und/oder Grenzstand korrelierenden Parameter und/oder den Messwert durch das Gehäuse hindurch drahtlos, etwa an einen Empfänger, zu übertragen. Dazu kann die Kommunikationseinheit insbesondere bekannte Kommunikationsstandards wie Bluetooth (beispielsweise Bluetooth Low Energy), ZigBee, Wi-Fi (beispielsweise Wi-Fi HaLow) oder zellulare Mobilfunkstandards wie 2G, 3G oder 4G (beispielsweise LTE Cat 0) verwenden. Die Kommunikationseinheit kann auch dazu eingerichtet sein, eine optische Kommunikationsverbindung bereitzustellen. Die Kommunikationseinheit kann daher beispielsweise ein Bluetooth-Modul, ein Infrarotmodul, ein Funkmodul und/oder ein WLAN-Modul aufweisen.

Gemäß einer Ausführungsform der Erfindung weist der Radarsensor ferner eine Energieversorgungseinheit auf, welche in dem Gehäuse angeordnet ist und welche dazu eingerichtet ist, die Sensoreinheit und die Auswerteeinheit mit elektrischer Energie zu versorgen. Auch die Kommunikationseinheit und/oder andere Komponenten des Radarsensors können über die Energieversorgungseinheit mit elektrischer Energie versorgt werden. Die Energieversorgungseinheit kann dazu wenigstens eine Batterie aufweisen, wobei die Batterie auswechselbar oder nicht auswechselbar sein kann.

Gemäß einer weiteren Ausführungsform weist die Energieversorgungseinheit einen Akkumulator auf. Ferner kann die Energieversorgungseinheit eine Ladeeinheit zum Aufladen des Akkumulators aufweisen. Der Akkumulator kann verwendet werden, um die Sensoreinheit, die Auswerteeinheit und/oder die Kommunikationseinheit mit elektrischer Energie zu versorgen. Durch das Wiederaufladen des Akkumulators durch die Ladeeinheit kann die Betriebsdauer des Radarsensors verlängert werden.

Die Energieversorgungseinheit kann auch eine Vorrichtung zur Ermittlung des Ladezustands des Akkumulators aufweisen. Der Radarsensor kann dazu eingerichtet sein, die Messung des Füllstandes und/oder Grenzstandes in dem Behälter nach bestimmten Zeitabständen zu wiederholen, wobei der Zeitabstand von dem Ladezustand des Akkumulators abhängen kann. Insbesondere kann die Sensoreinheit dazu eingerichtet sein, das Radarsignal weniger häufig abzustrahlen, wenn der Ladezustand des Akkumulators niedrig ist. Dementsprechend kann die Auswerteeinheit dazu eingerichtet sein, das mit dem Füllstand und/oder dem Grenzstand korrelierenden Messsignal, den Messwert und/oder den Parameter weniger häufig zu bestimmen, wenn der Ladezustand des Akkumulators niedrig ist und/oder eine definierbare oder vorbestimmte Schwelle erreicht. Außerdem kann die Kommunikationseinheit dazu ausgeführt sein, den Parameter, das Messsignal und/oder den Messwert weniger häufig zu senden, wenn der Ladezustand des Akkumulators niedrig ist und/oder eine definierbare oder vorbestimmte Schwelle des erreicht.

Gemäß einer weiteren Ausführungsform weist die Ladeeinheit der Energieversorgungseinheit eine Solarzelle auf und das Gehäuse des Radarsensors ist lichtdurchlässig ausgebildet. Dazu kann zumindest ein Teil des Gehäuses beispielsweise aus einem lichtdurchlässigen Kunststoff wie Polyethylen oder Polypropylen gefertigt sein. Dadurch kann die Betriebsdauer des Radarsensors in vorteilhafter Weise erhöht werden und/oder der Radarsensor kann über einen langen Zeitraum autark betrieben werden.

Gemäß einer weiteren Ausführungsform weist die Ladeeinheit der Energieversorgungseinheit einen Generator zur Gewinnung elektrischer Energie aus Vibrationen auf. Dadurch kann die Betriebsdauer des Radarsensors in vorteilhafter Weise erhöht werden und/oder der Radarsensor kann über einen langen Zeitraum autark betrieben werden.

Gemäß einer weiteren Ausführungsform weist die Ladeeinheit der Energieversorgungseinheit einen Empfänger für eine drahtlose Energieübertragung mittels elektromagnetischer Induktion auf. Beispielsweise kann der Empfänger für die drahtlose Energieübertragung mit dem Qi-Standard kompatibel sein. Dies ermöglicht eine effiziente und sichere Aufladung der Energieversorgungseinheit, ohne dass ein Kabel zur Energieübertragung notwendig wäre.

Gemäß einer weiteren Ausführungsform weist die Ladeeinheit der Energieversorgungseinheit einen thermoelektrischen Generator zur Gewinnung elektrischer Energie aus räumlichen Temperaturunterschieden auf. Auch dies kann die Betriebsdauer des Radarsensors in vorteilhafter Weise erhöhen.

Gemäß einer Ausführungsform der Erfindung weist der Radarsensor ferner einen Magnetschalter, einen Magnet zur Betätigung des Magnetschalters und eine Schutzfolie zur Abdeckung der Klebefläche und/oder Dichtfläche auf. Die Schutzfolie ist dabei derart mit dem Magneten verbunden, dass ein Abziehen der Schutzfolie von der Klebefläche und/oder der Dichtfläche ein Entfernen des Magneten von dem Gehäuse zur Folge hat. Weiter ist der Radarsensor dazu ausgeführt, dass das Entfernen des Magneten von dem Gehäuse den Magnetschalter von einem ersten Schalterzustand in einen zweiten Schalterzustand schaltet, wobei in dem ersten Schalterzustand zumindest ein Teil der Sensoreinheit und/oder Auswerteeinheit nicht von einer Energieversorgungseinheit, etwa einer Batterie, des Radarsensors mit Energie versorgt wird, und wobei der Teil der Sensoreinheit und/oder Auswerteeinheit in dem zweiten Schalterzustand von der Energieversorgungseinheit mit Energie versorgt wird.

Durch Vorsehen der Schutzfolie mit dem damit verbundenen Magneten kann in vorteilhafter Weise sichergestellt sein, dass sich die Energieversorgungseinheit während einer Lagerung des Radarsensors nicht entlädt. Des Weiteren kann durch die Aktivierung der Energieversorgung mittels Abziehen der Schutzfolie zum einen die Energieversorgung auf einfache und für einen Benutzer intuitive Weise aktiviert werden und zum anderen gleichzeitig die Klebefläche und/oder die Dichtfläche freigelegt werden, welche zur Anbringung und/oder Abdichtung des Radarsensors vorgesehen und/oder ausgeführt ist. Auf diese Weise kann sichergestellt werden, dass der Radarsensor vor Inbetriebnahme und/oder Anbringung an einem Messort, d.h. vor dem Abziehen der Schutzfolie, keine bzw. nur minimal Energie verbraucht, und dass bei Inbetriebnahme und/oder Anbringung des Radarsensors am Messort die Energieversorgung automatisch aktiviert wird, ohne dass es eines weiteren Schrittes des Benutzers zur Inbetriebnahme bedarf. Auch kann aufgrund der Aktivierung der Energieversorgung über den Magnetschalter in vorteilhafter Weise das Gehäuse vollständig geschlossen ausgebildet werden, so dass die darin angeordneten Komponenten des Radarsensors umfassend und zuverlässig vor äußeren Einflüssen geschützt werden können.

Das Entfernen des Magneten von dem Gehäuse führt dazu, dass der Magnetschalter von dem ersten Schalterzustand in den zweiten Schalterzustand schaltet. Ein Magnetschalter ist hier und im Folgenden ein Schalter, der über ein Magnetfeld geschaltet und/oder betätigt wird. Der Magnetschalter kann beispielsweise als Reed-Schalter ausgeführt sein. Insbesondere kann in dem ersten Schalterzustand ein elektrischer Kontakt geöffnet sein, während in dem zweiten Schalterzustand der elektrische Kontakt geschlossen ist. Der Radarsensor kann also dazu ausgeführt sein, dass in dem ersten Schalterzustand ein elektrischer Stromkreis unterbrochen ist, während der elektrische Stromkreis in dem zweiten Schalterzustand geschlossen ist.

Gemäß einer weiteren Ausführungsform ist der Magnetschalter ein Reed-Schalter. Der Reed-Schalter kann eine magnetische Schaltzunge aufweisen, die sich bei dem Entfernen des Magneten von dem Gehäuse und damit dem Magnetschalter bewegen kann. Durch die Bewegung der magnetischen Schaltzunge kann ein elektrischer Kontakt geschlossen oder geöffnet werden. Mit anderen Worten kann der Reed-Schalter durch das Magnetfeld des mit der Schutzfolie verbundenen Magneten in einem geöffneten oder geschlossenen Schalterzustand gehalten werden. Der Schalterzustand kann sich ändern, wenn der Magnet von dem Magnetschalter durch das Abziehen der Schutzfolie entfernt wird.

Ein Reed-Schalter kann auch zwei magnetische Schaltzungen aufweisen, die sich bei dem Entfernen des Magneten von dem Gehäuse/Magnetschalter relativ zueinander bewegen. Ferner kann in dem Gehäuse des Radarsensors ein zweiter Magnet angeordnet sein, der den Reed-Schalter in dem zweiten Schalterzustand hält, solange kein Magnetfeld von außerhalb des Gehäuses einwirkt.

Gemäß einer Ausführungsform der Erfindung weist der Radarsensor ferner eine an dem Gehäuse angeordnete Ablöseeinrichtung zum zerstörungsfreien Lösen des Radarsensors von der Behälterwand auf. Die Ablöseeinrichtung kann hierbei allgemein eine Struktur des Gehäuses, etwa eine Verstärkung, einen verstärkten Bereich, eine Ausformung des Gehäuses und/oder eine außenseitig am Gehäuse angeordnete Vorrichtung bezeichnen. Ein Anwender oder Benutzer des Radarsensors kann so den Radarsensor vom vorgesehenen Messort ohne die Verwendung von Spezialwerkzeug nach Beendigung der Messaufgabe bzw. zu Recyclingzwecken entfernen. Bei der Ablöseeinrichtung kann es sich beispielsweise um eine Abhebelvorrichtung handeln, welche dazu ausgestaltet ist, die Klebefläche und/oder die Dichtfläche mit einer Spalt- und/oder Schälkraft zu beaufschlagen. Dadurch kann die Klebeverbindung über ihre mechanische Belastbarkeit hinaus beansprucht werden, um so die Klebung zu lösen. Die Verwendung eines Hebeleisens, Schraubendrehers oder ähnlichem kann hierbei ausreichen. Die Abhebelvorrichtung kann etwa durch einen verstärkten Bereich und/oder eine verstärkte Kante des Gehäuses bereitgestellt sein. Alternativ oder zusätzlich kann das Gehäuse an seiner Außenseite derart ausgeformt sein, um mit einem entsprechenden Werkzeug die Klebefläche mit einer Torsionskraft zu beaufschlagen und die Klebung zu lösen bzw. aufzubrechen. Das aufgebrachte Drehmoment kann dabei vornehmlich parallel zu einer Oberflächennormalen der Klebefläche sein. Das Gehäuse des Radarsensors kann dabei derart ausgestaltet sein, dass es an den entsprechenden Stellen mechanisch verstärkt ist, um die beim Ablösevorgang auftretenden Scher- und Hebelkräfte aufzunehmen, ohne dass das Gehäuse dabei zerstört wird. Beispielsweise können zumindest zwei parallele Seitenflächen des Gehäuses derart ausgebildet sein, dass mit einem Rollgabel-, Zangen-, Ring-, Maulschlüssel oder ähnlichem der Radarsensor von der Behälterwand abgeschert werden kann.

Ein weiterer nicht erfindungsgemäßer Aspekt der vorliegenden Offenbarung betrifft die Verwendung eines Radarsensors, so wie voranstehend und nachfolgend beschrieben, zur Messung eines Füllstandes und/oder Grenzstandes eines Mediums in einem Behälter, insbesondere in einem Kunststoffbehälter. Insbesondere kann der Radarsensor in einer Außenanwendung, d.h. im Freien, verwendet werden.

Ein weiterer Aspekt der Erfindung betrifft eine Sensoranordnung, welche einen Radarsensor, so wie voranstehend und nachfolgend beschrieben, aufweist. Ferner weist die Sensoranordnung einen Behälter, etwa einen Kunststoffbehälter, mit einer Behälterwand auf. Der Radarsensor ist dabei mit der Klebefläche außenseitig an der Behälterwand angeordnet, so dass der Gehäusebereich des Radarsensors gegenüberliegend zu der Behälterwand angeordnet ist, wobei die Dichtfläche und/oder die Klebefläche des Radarsensors zumindest teilweise zwischen dem Gehäuse des Radarsensors und der Behälterwand, insbesondere zwischen einem Teil des Gehäusebereichs und der Behälterwand, angeordnet ist.

Merkmale, Elemente und/oder Funktionen des Radarsensors, so wie voranstehend und nachfolgend beschreiben, können Merkmale, Elemente und/oder Funktionen der Sensoranordnung, so wie voranstehend und nachfolgend beschrieben, sein und umgekehrt.

Im Folgenden werden Ausführungsbeispiele der Erfindung unter Bezugnahme auf die Figuren beschrieben.

### Kurze Beschreibung der Figuren

Fig. 1 zeigt schematisch eine Sensoranordnung mit Radarsensoren gemäß einem Ausführungsbeispiel.
Fig. 2 bis Fig. 5 zeigen jeweils schematisch eine Sensoranordnung mit einem Radarsensor gemäß einem Ausführungsbeispiel der Erfindung.

Ähnliche, ähnlich wirkende, gleiche oder gleich wirkende Elemente sind in den Figuren mit ähnlichen oder gleichen Bezugszeichen versehen. Die Figuren sind lediglich schematische und nicht maßstabsgetreu.

### Detaillierte Beschreibung von Ausführungsbeispielen

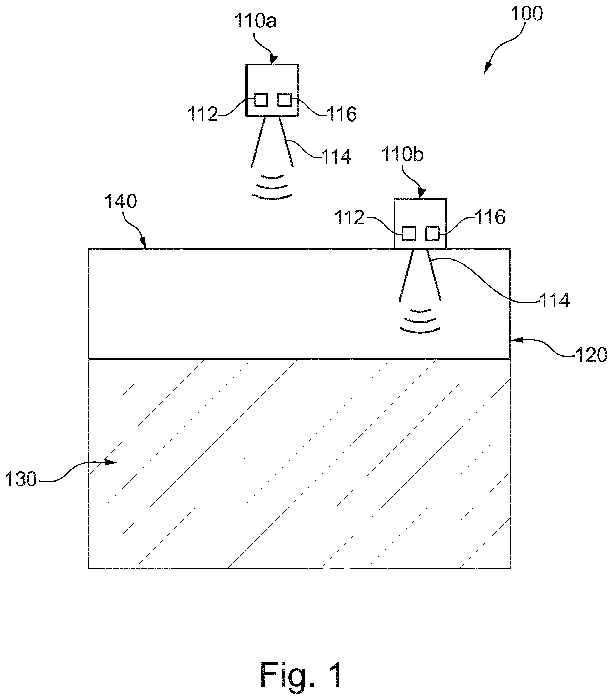

Figur 1 zeigt schematisch eine Sensoranordnung 100 mit Radarsensoren 110a, 110b gemäß einem Ausführungsbeispiel. Die beiden Radarsensoren 110a, 110b sind dabei exemplarische Ausführungsbeispiele, welche unterschiedliche Anbringungen oder Anordnungen der Radarsensoren 110a, 110b an einem Behälter 120 der Sensoranordnung 100 illustrieren.

Der Behälter 120 ist zumindest teilweise mit einem Medium 130, etwa einer Flüssigkeit und/oder einem Schüttgut, gefüllt.

Die Radarsensoren 110a, 110b weisen eine Sensoreinheit 112 mit einer Antenne 114 zum Abstrahlen und/oder Empfangen eines Radarsignals auf. Das Radarsignal kann dabei als Sendesignal abgestrahlt und ein an dem Medium reflektierter Teil des Radarsignals kann als Empfangssignal empfangen werden. Ferner weisen die Radarsensoren 110a, 110b eine Auswerteeinheit 116 zum Ermitteln eines Messsignals basierend auf dem Radarsignal und/oder basierend auf einer Laufzeitmessung zwischen Abstrahlen des Sendesignals und Empfangen des Empfangssignals auf. Das Messsignal kann dabei mit dem Füllstand und/oder dem Grenzstand korrelieren bzw. repräsentativ dafür sein.

Der Radarsensor 110b zur Füllstandmessung und/oder Grenzstandmessung ist in den Behälter 120 und/oder eine Oberseite des Behälters 120 durch Einschrauben und/oder Anflanschen eingebaut. Somit befindet sich die Antenne 114 innerhalb des Behälters 120 und/oder ragt zumindest teilweise in den Behälter 120 hinein. Die Auswerteeinheit 116 und/oder weitere Elektronik des Radarsensors 110b ist in der Regel außerhalb des Behälters 120 angeordnet. Eine entsprechende Dichtung kann das Austreten von Medium 130 aus dem Behälter 120 im Bereich des Radarsensors 110b verhindern. Weitere Vorrichtungen und/oder Vorkehrungen können dafür sorgen, dass kein Medium 130 über die Antenne 114 in den Radarsensor 110b eindringen kann.

Alternativ, etwa im Falle eines Kunststoffbehälters 120, kann der Radarsensor 110a auch über dem Behälter 120 angebracht werden, so dass die Messung durch eine Behälterwand 140 hindurch erfolgen kann. Hierbei kann es jedoch vorkommen, dass sich bei entsprechenden Umgebungsbedingungen Kondensat auf dem Behälter 120 und/oder der Behälterwand 140 bildet und/oder dass sich Wasser oder andere Medien in einer Kuhle auf dem Behälter 120 ansammeln. In beiden Fällen kann dies die Auswertung der Radarsignale erschweren oder sogar unmöglich machen.

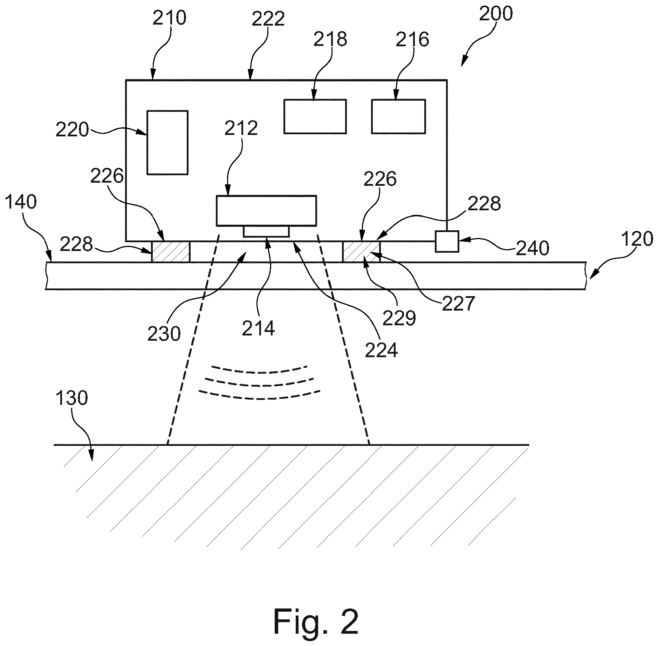

Figur 2 zeigt schematisch eine Sensoranordnung 200 mit einem Radarsensor 210 und einem Behälter 120 gemäß einem Ausführungsbeispiel der Erfindung. Der Behälter 120 ist analog Figur 1 zumindest teilweise mit einem Medium 130 gefüllt und verfügt über eine Behälterwand 140, welche beispielsweise eine Oberseite des Behälters 120 bilden kann.

Der Radarsensor 210 weist eine Sensoreinheit 212 mit einer Antenne 214 zum Abstrahlen und/oder Empfangen des Radarsignals auf. Im Speziellen kann analog der Figur 1 über die Antenne 214 ein Sendesignal abgestrahlt und ein Empfangssignal empfangen werden.

Ferner weist der Radarsensor 210 eine Auswerteeinheit 216 zum Ermitteln eines Messsignals basierend auf dem Radarsignal und/oder basierend auf einer Laufzeitmessung zwischen Abstrahlen des Sendesignals und Empfangen des Empfangssignals auf. Das Messsignal kann dabei mit dem Füllstand und/oder dem Grenzstand korrelieren bzw. repräsentativ dafür sein. Auch kann die Auswerteeinheit 216 einen Messwert ermitteln, welcher repräsentativ und/oder indikativ für den Füllstand und/oder den Grenzstand sein kann.

Weiter weist der Radarsensor 210 eine Kommunikationseinheit 218 auf. Die Kommunikationseinheit 218 ist insbesondere zur drahtlosen Datenübertragung eingerichtet. Über die Kommunikationseinheit 218 kann etwa das Messsignal und/oder der Messwert drahtlos an einen Empfänger übermittelt. Auch können über die Kommunikationseinheit 218 Daten empfangen werden. Die Kommunikationseinheit 218 kann beispielsweise ein Bluetooth-Modul, ein WLAN-Modul, ein Infrarot-Modul, ein Funk-Modul oder dergleichen aufweisen.

Weiter weist der Radarsensor 210 eine Energieversorgungseinheit 220 auf, welche die Sensoreinheit 212, die Auswerteeinheit 216, die Kommunikationseinheit 220 und/oder weitere Komponenten mit elektrischer Energie versorgen kann. Beispielsweise kann die Energieversorgungseinheit 220 wenigstens eine Batterie aufweisen.

Ferner weist der Radarsensor 210 ein Gehäuse 222 auf, welches die Sensoreinheit 212, die Antenne 214, die Auswerteeinheit 216, die Kommunikationseinheit 218 und die Energieversorgungseinheit 220 umschließt, insbesondere hermetisch umhüllt. Das Gehäuse 220 kann zumindest teilweise aus Kunststoff gefertigt sein.

Das Gehäuse 222 weist einen Gehäusebereich 224 auf, über welchen hindurch das Radarsignal abgestrahlt und/oder empfangen werden kann. Der Gehäusebereich 224 kann somit einen Abstrahl- und/oder Empfangsbereich 224 des Radarsensors 210 (bzw. der Antenne 214) bezeichnen. Der Gehäusebereich 224 kann dabei zumindest einen Teil einer Gehäuseseite und/oder einer Gehäusewandung bezeichnen. Der Radarsensor 210 ist dabei derart an der Behälterwand 140 angeordnet, dass der Gehäusebereich 224 der Behälterwand 140 gegenüberliegt.

Außenseitig an dem Gehäuse 222 ist zumindest entlang eines Teils eines Außenumfangs des Gehäusebereichs 224 und/oder eines Teilbereichs des Gehäuses eine Klebefläche 226 mit einem Klebematerial 227 angeordnet. Mit anderen Worten kann die Klebefläche 226 den Gehäusebereich 224 zumindest teilweise entlang des Außenumfangs des Gehäusebereichs 224 und/oder des Teilbereichs des Gehäuses umlaufen. Die Klebefläche kann dabei an den Gehäusebereich heranragen, mit diesem in Kontakt stehen oder, nicht erfindungsgemäß, von diesem beabstandet sein. Mithilfe der Klebefläche 226 ist der Radarsensor 210 zuverlässig an der Behälterwand 140 angebracht und/oder befestigt.

Ferner ist außenseitig an dem Gehäuse 222 zumindest entlang eines Teils des Außenumfangs des Gehäusebereichs 224 und/oder in einem Teilbereich des Gehäuses eine Dichtfläche 228 mit einem Dichtmaterial 229 angeordnet. Mit anderen Worten kann die Dichtfläche 228 den Gehäusebereich 224 zumindest teilweise entlang des Außenumfangs des Gehäusebereichs 224 und/oder in dem Teilbereich des Gehäuses umlaufen. Die Dichtfläche kann dabei an den Gehäusebereich heranragen, mit diesem in Kontakt stehen oder von diesem beabstandet sein. Mithilfe der Dichtfläche 228 kann ein Bereich 230 zwischen dem Gehäusebereich 224 und der Behälterwand 140 zuverlässig gegenüber Umwelteinflüssen, etwa gegen Eindringen von Medien, geschützt sein. Hierdurch können Störeinflüsse vermieden werden.

In dem in Figur 2 gezeigten Ausführungsbeispiel ist das Klebematerial 227 durch das Dichtmaterial 229 bereitgestellt und umgekehrt. Gleichsam ist die Klebefläche 226 und die Dichtfläche 228 einstückig ausgestaltet. Mit anderen Worten wird die Klebefläche 226 durch die Dichtfläche 228 bereitgestellt und umgekehrt. Als Klebematerial 227 und/oder Dichtmaterial 229 kann etwa ein abdichtender Klebstoff, beispielsweise Acrylatklebstoff bspw. in Form eines geschlossenzelligen doppelseitigen Acryltklebebandes, verwendet werden.

Die Klebefläche 226 und/oder die Dichtfläche 228 grenzt im Wesentlichen den Bereich 230 zwischen dem dem Behälter 120 zugewandten Gehäusebereich 224 des Radarsensors 210 und der dem Radarsensor 210 zugewandten Behälterwand 140 von der Umgebung ab. Somit kann die Bildung von Kondensat bzw. das Eindringen von unerwünschten Medien (bspw. Wasser) in diesem Bereich 230 verhindert werden, was zu Fehlmessungen und/oder Fehlinterpretation des Füllstandes des Mediums 130 führen kann. Die Klebefläche 226 und/oder die Dichtfläche 228 kann beispielsweise ein geschlossenzelliges doppelseitiges Acrylatklebeband aufweisen.

Der Radarsensor 210 weist ferner eine Ablöseeinrichtung 240 zum weitestgehend zerstörungsfreien Lösen des Radarsensors 210 von der Behälterwand 140 auf. Die Ablöseeinrichtung 240 kann hierbei allgemein eine Struktur des Gehäuses 222, etwa eine Verstärkung, einen verstärkten Bereich, einen entsprechend ausgestaltete Gehäuseform und/oder eine außenseitig am Gehäuse 222 angeordnete Vorrichtung bezeichnen. Ein Anwender oder Benutzer des Radarsensors 210 kann so den Radarsensor 210 vom vorgesehenen Messort ohne die Verwendung von Spezialwerkzeug nach Beendigung der Messaufgabe bzw. zu Recyclingzwecken entfernen. Bei der Ablöseeinrichtung 240 kann es sich beispielsweise um eine Abhebelvorrichtung 240 handeln, welche dazu ausgestaltet ist, die Klebefläche 226 und/oder die Dichtfläche 228 mit einer Spalt- und/oder Schälkraft zu beaufschlagen. Dadurch kann die Klebeverbindung über ihre mechanische Belastbarkeit hinaus beansprucht werden, um so die Klebung zu lösen. Die Verwendung eines Hebeleisens, Schraubendrehers oder ähnlichem kann hierbei ausreichen. Die Abhebelvorrichtung 240 kann etwa durch einen verstärkten Bereich 240 und/oder eine verstärkte Kante 240 des Gehäuses 222 bereitgestellt sein, an die das entsprechende Werkzeug angesetzt werden kann. Alternativ oder zusätzlich kann das Gehäuse 222 an seiner Außenseite derart ausgeformt sein und/oder mit einer oder mehreren Vertiefungen und/oder Durchbrüchen, in welche etwa das entsprechende Werkzeug zumindest teilweise eingesteckt werden kann, versehen sein, um mit einem entsprechenden Werkzeug die Klebefläche 226 mit einer Torsionskraft zu beaufschlagen und die Klebung zu lösen bzw. aufzubrechen.

Das aufgebrachte Drehmoment kann dabei vornehmlich parallel zu einer Oberflächennormalen der Klebefläche 226 sein. Das Gehäuse 222 des Radarsensors 210 kann dabei derart ausgestaltet sein, dass es an den entsprechenden Stellen mechanisch verstärkt ist, um die beim Ablösevorgang auftretenden Scher- und Hebelkräfte aufzunehmen, ohne dass das Gehäuse 222 dabei zerstört wird. Beispielsweise können zumindest zwei parallele Seitenflächen des Gehäuses 222 derart ausgebildet sein, dass mit einem Rollgabel-, Zangen-, Ring-, Maulschlüssel oder ähnlichem der Radarsensor 210 abgeschert werden kann.

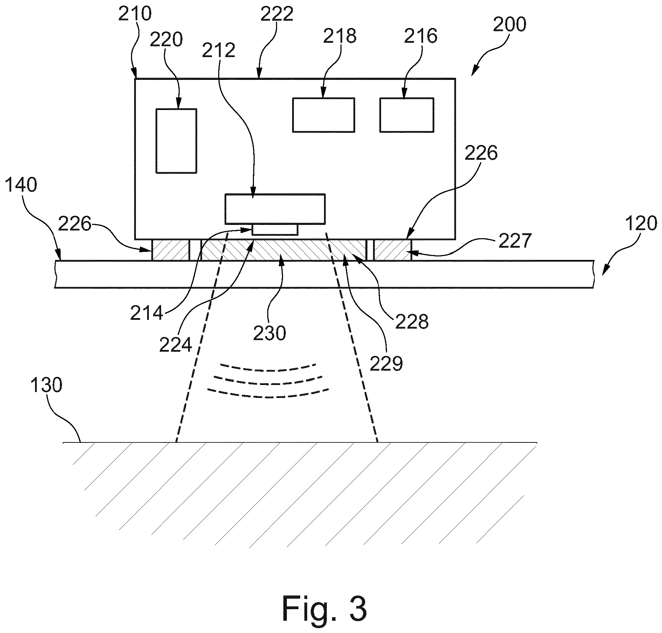

Figur 3 zeigt ein weiteres Ausführungsbeispiel einer Sensoranordnung 200 mit einem Radarsensor 210 und einem Behälter 120. Sofern nicht anders beschrieben, weist die Sensoranordnung 200 und/oder der Radarsensor 210 der Figur 3 dieselben Elemente und Merkmale wie die Sensoranordnung 200 und/oder der Radarsensor 210 der Figur 2 auf.

Bei dem in Figur 3 gezeigten Ausführungsbeispiel sind die Klebefläche 226 und die Dichtfläche 228 separat ausgeführt. Die Klebefläche 226 umläuft dabei die Dichtfläche 228 entlang eines Außenumfangs. Des Weiteren deckt die Dichtfläche 228 den Gehäusebereich 224 zumindest teilweise flächig ab. Die Dichtfläche 228 kann somit als zumindest teilweise Füllung des Bereichs 230 zwischen dem Gehäusebereich 224 und der Behälterwand 140 erachtet werden. Der Bereich 230 kann dabei ein Volumen bezeichnen, welches zwischen der Klebefläche 226, dem dem Behälter 120 zugewandten Gehäusebereich 224 und der dem Radarsensor zugewandten Behälterwand 140 gebildet wird.

Bei dem Dichtmaterial 229 bzw. Füllmaterial 229 kann es sich beispielsweise um einen Werkstoff handeln, dessen relative Permittivität sich nicht, bzw. nur in geringem Maße von der der Behälterwand 140 und/oder dem Gehäusebereich 224, welches aus einem Kunststoff bestehen kann, unterscheidet. Hierbei kann es sich um dasselbe Material wie das Klebematerial 226 handeln, es sind aber auch andere Materialen und/oder auch Flüssigkeiten mit entsprechender relativer Permittivität, beispielsweise zwischen 1,5 und 3, denkbar.

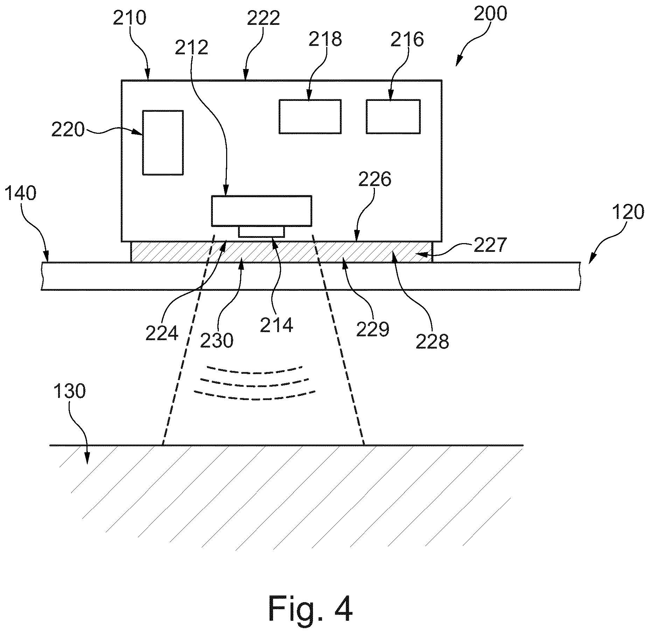

Figur 4 zeigt ein weiteres Ausführungsbeispiel einer Sensoranordnung 200 mit einem Radarsensor 210 und einem Behälter 120. Sofern nicht anders beschrieben, weist die Sensoranordnung 200 und/oder der Radarsensor 210 der Figur 4 dieselben Elemente und Merkmale wie die Sensoranordnungen 200 und/oder Radarsensoren 210 der Figuren 2 und 3 auf.

Bei dem in Figur 4 gezeigten Ausführungsbeispiel ist die Klebefläche 226 und die Dichtfläche 228 einstückig ausgebildet. Auch hier kann die Klebefläche 226 durch die Dichtfläche 228 gebildet sein und umgekehrt. Mit anderen Worten kann die Klebefläche 226 abdichtende und die Dichtfläche 228 kann klebende Eigenschaften besitzen. Die Klebefläche 226 und die Dichtfläche 228 können somit aus ein und demselben Werkstoff bestehen. Dies kann eine Herstellung erheblich vereinfachen.

Beispielsweise handelt es sich bei dem Klebematerial 227 und/oder dem Dichtmaterial 229 um ein Material mit einer relativen Permittivität von 1,5 bis 3,0. Durch Verwendung eines geschlossenzelligen doppelseitigem Acrylatklebeband, welches abdichtende Eigenschaften besitzt, wird in diesem Falle zusätzlich durch Vergrößerung der Klebefläche 226 die Haftkraft des Radarsensors an der Behälterwand 140 erhöht.

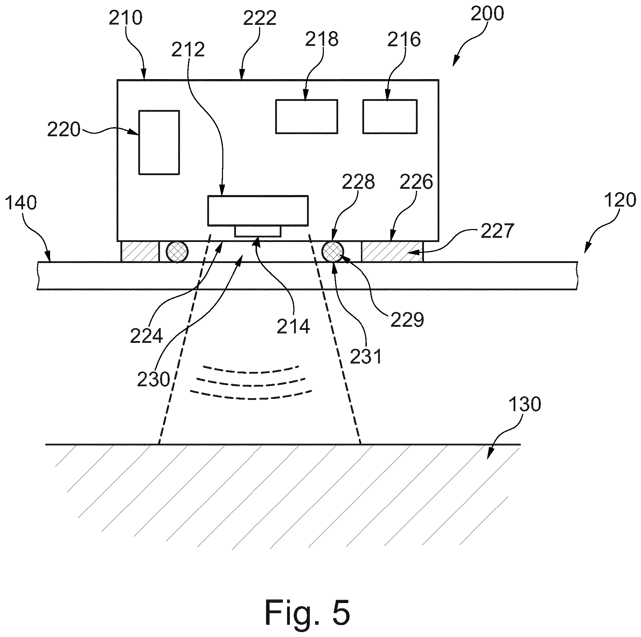

Figur 5 zeigt ein weiteres Ausführungsbeispiel einer Sensoranordnung 200 mit einem Radarsensor 210 und einem Behälter 120. Sofern nicht anders beschrieben, weist die Sensoranordnung 200 und/oder der Radarsensor 210 der Figur 5 dieselben Elemente und Merkmale wie die Sensoranordnungen 200 und/oder die Radarsensoren 210 der Figuren 2 bis 4 auf.

Bei dem Ausführungsbeispiel der Figur 5 kann die Klebefläche 226 nicht komplett umlaufend ausgebildet sein und/oder keine abdichtenden Eigenschaften besitzen. Zur Abdichtung des Gehäusebereichs 224 zwischen Behälterwand 140 und Gehäuse 222 ist eine zusätzliche Dichtung 231, beispielsweise aus einem elastischen Material, etwa Fluor-Kautschuck und/oder einem Elastomer mit vergleichbaren abdichtenden Eigenschaften, zwischen der Behälterwand 140 und dem Gehäusebereich 224 angeordnet. Die Dichtung 231 kann den Gehäusebereich 224 dabei zumindest teilweise umlaufen und die Dichtfläche 228 bilden (oder umgekehrt). Die Dichtung 231 und/oder die Dichtfläche 228 kann dabei etwa in Form eines O-Rings ausgestaltet sein.

## Patentansprüche

1. Radarsensor (210) zur Messung eines Füllstandes und/oder Grenzstandes eines Füllgutes in einem Behälter (120), der Radarsensor (210) aufweisend:
eine Sensoreinheit (212) zum Abstrahlen und/oder Empfangen eines Radarsignals;
eine Auswerteeinheit (216) zum Ermitteln, basierend auf dem Radarsignal, eines mit dem Füllstand und/oder dem Grenzstand korrelierenden Messsignals; und
ein Gehäuse (222) mit wenigstens einem Gehäusebereich (224), welcher dazu ausgebildet ist, zur Messung des Füllstandes und/oder des Grenzstandes gegenüberliegend zu einer Behälterwand (140) des Behälters (120) angeordnet zu werden;
wobei der Gehäusebereich (224) derart ausgebildet ist, dass das Radarsignal durch den Gehäusebereich (224) hindurch transmittierbar ist;
wobei außenseitig an dem Gehäuse (222) zumindest entlang eines Teils eines Außenumfangs des Gehäusebereichs (224) eine Klebefläche (226) mit einem Klebematerial (227) angeordnet ist, welche zur Anbringung des Radarsensors (210) an der Behälterwand (140) des Behälters (120) ausgebildet ist;
wobei außenseitig an dem Gehäuse (222) zumindest entlang eines Teils des Außenumfangs des Gehäusebereichs (224) eine Dichtfläche (228) mit einem Dichtmaterial (229) angeordnet ist, welche dazu ausgebildet ist, den Gehäusebereich (224) bei Anbringung des Radarsensors (210) an der Behälterwand (140) zumindest teilweise abzudichten; und
wobei die Sensoreinheit dazu ausgeführt ist, das Radarsignal durch den Gehäusebereich hindurch abzustrahlen und/oder zu empfangen.

2. Radarsensor (210) nach einem der voranstehenden Ansprüche,
wobei die Klebefläche (226) und/oder die Dichtfläche (228) den Gehäusebereich (224) vollständig entlang des Außenumfangs des Gehäusebereichs umschließt.

3. Radarsensor (210) nach einem der voranstehenden Ansprüche,
wobei die Klebefläche (226) die Dichtfläche (228) zumindest teilweise, insbesondere vollständig umläuft.

4. Radarsensor (210) nach einem der voranstehenden Ansprüche,
wobei die Dichtfläche (228) flächig ausgebildet ist; und/oder
wobei die Dichtfläche (228) den Gehäusebereich (224) zumindest teilweise flächig abdeckt.

5. Radarsensor (210) nach einem der voranstehenden Ansprüche,
wobei das Dichtmaterial (229) der Dichtfläche (228) durch das Klebematerial (227) der Klebefläche (226) bereitgestellt ist; und/oder
wobei die Klebefläche (226) und die Dichtfläche (228) einstückig ausgebildet sind.

6. Radarsensor (210) nach einem der Ansprüche 1 bis 4,
wobei sich das Klebematerial (227) von dem Dichtmaterial (229) unterscheidet.

7. Radarsensor (210) nach einem der voranstehenden Ansprüche,
wobei die Klebefläche (226) und/oder die Dichtfläche (228) zumindest teilweise einen Acrylatklebstoff, insbesondere ein Acrylatklebeband, aufweist.

8. Radarsensor (210) nach einem der voranstehenden Ansprüche,
wobei das Klebematerial (227) und/oder das Dichtmaterial (229) eine relative Permittivität von 1,5 bis 3 aufweist.

9. Radarsensor (210) nach einem der voranstehenden Ansprüche,
wobei das Gehäuse (222) die Sensoreinheit (212) und die Auswerteeinheit (216) vollständig und/oder permanent umschließt.

10. Radarsensor (210) nach einem der voranstehenden Ansprüche,
wobei das Gehäuse (222) vollständig geschlossen ist; und/oder wobei das Gehäuse (222) die Sensoreinheit (212) und die Auswerteeinheit (216) hermetisch, insbesondere staubdicht, wasserdicht und/oder luftdicht, umschließt.

11. Radarsensor (210) nach einem der voranstehenden Ansprüche,
wobei der Radarsensor nach außen vollständig kabellos ausgeführt ist; und/oder
wobei das Gehäuse (222) keine Kabeldurchführung aufweist.

12. Radarsensor (210) nach einem der voranstehenden Ansprüche, ferner aufweisend:
eine Kommunikationseinheit (218), welche in dem Gehäuse (222) angeordnet ist und welche dazu eingerichtet ist, das Messsignal und/oder einen mit dem Messsignal korrelierenden Messwert durch das Gehäuse (222) hindurch an einen Empfänger zu übermitteln.

13. Radarsensor (210) nach einem der voranstehenden Ansprüche, ferner aufweisend:
eine Energieversorgungseinheit (220), welche in dem Gehäuse (222) angeordnet ist und welche dazu eingerichtet ist, die Sensoreinheit (212) und die Auswerteeinheit (216) mit elektrischer Energie zu versorgen.

14. Radarsensor (210) nach einem der voranstehenden Ansprüche, ferner aufweisend:
eine an dem Gehäuse (222) angeordnete Ablöseeinrichtung (240) zum zerstörungsfreien Lösen des Radarsensors (210) von der Behälterwand (140).

15. Sensoranordnung (200), aufweisend:
einen Radarsensor (210) nach einem der voranstehenden Ansprüche; und
einen Behälter (120) mit einer Behälterwand (140);
wobei der Radarsensor (210) mit der Klebefläche (226) außenseitig an der Behälterwand angeordnet ist, so dass der Gehäusebereich (224) des Radarsensors gegenüberliegend zu der Behälterwand (140) angeordnet ist; und
wobei die Dichtfläche (228) des Radarsensors zumindest teilweise zwischen dem Gehäuse (222) des Radarsensors und der Behälterwand (140), insbesondere zwischen einem Teil des Gehäusebereichs (224) und der Behälterwand (140), angeordnet ist.

## Claims

1. Radar sensor (210) for measuring a fill level and/or limit level of a filling material in a container (120), the radar sensor (210) comprising:
a sensor unit (212) for emitting and/or receiving a radar signal;
an evaluation unit (216) for determining, based on the radar signal, a measurement signal correlating with the fill level and/or the limit level; and
a housing (222) having at least one housing portion (224) configured to be disposed opposite a container wall (140) of the container (120) for measuring the fill level and/or the limit level;
wherein the housing portion (224) is configured such that the radar signal is transmittable through the housing portion (224);
wherein an adhesive surface (226) with an adhesive material (227) is arranged on an outside of the housing (222) at least along a part of an outer circumference of the housing portion (224), which adhesive surface is formed for attaching the radar sensor (210) to the container wall (140) of the container (120);
wherein a sealing surface (228) with a sealing material (229) is arranged on the outside of the housing (222) at least along a part of the outer circumference of the housing portion (224), which sealing surface (228) is configured to at least partially seal the housing portion (224) when the radar sensor (210) is attached to the container wall (140); and
wherein the sensor unit is configured to transmit and/or receive the radar signal through the housing portion.

2. Radar sensor (210) according to any one of the preceding claims,
wherein the adhesive surface (226) and/or the sealing surface (228) completely surrounds the housing portion (224) along the outer circumference of the housing portion.

3. Radar sensor (210) according to any one of the preceding claims,
wherein the adhesive surface (226) at least partially, in particular completely, surrounds the sealing surface (228).

4. Radar sensor (210) according to any one of the preceding claims,
wherein the sealing surface (228) is flat; and/or
wherein the sealing surface (228) covers the housing portion (224) at least partially over a surface area.

5. Radar sensor (210) according to any one of the preceding claims,
wherein the sealing material (229) of the sealing surface (228) is provided by the adhesive material (227) of the adhesive surface (226); and/or
wherein the adhesive surface (226) and the sealing surface (228) are formed in one piece.

6. Radar sensor (210) according to any one of claims 1 to 4,
wherein the adhesive material (227) is different from the sealing material (229).

7. Radar sensor (210) according to any one of the preceding claims,
wherein the adhesive surface (226) and/or the sealing surface (228) comprises, at least in part, an acrylic adhesive, in particular an acrylic adhesive tape.

8. Radar sensor (210) according to any one of the preceding claims,
wherein the adhesive material (227) and/or the sealing material (229) has a relative permittivity of 1.5 to 3.

9. Radar sensor (210) according to any one of the preceding claims,
wherein the housing (222) completely and/or permanently encloses the sensor unit (212) and the evaluation unit (216).

10. Radar sensor (210) according to any one of the preceding claims,
wherein the housing (222) is completely closed; and/or
wherein the housing (222) hermetically encloses the sensor unit (212) and the evaluation unit (216), in particular in a dust-tight, water-tight and/or air-tight manner.

11. Radar sensor (210) according to any one of the preceding claims,
wherein the radar sensor is completely wireless to the outside; and/or wherein the housing (222) does not have a cable feedthrough.

12. Radar sensor (210) according to any one of the preceding claims, further comprising:
a communication unit (218) which is arranged in the housing (222) and which is configured to transmit the measurement signal and/or a measurement value correlating with the measurement signal through the housing (222) to a receiver.

13. Radar sensor (210) according to any one of the preceding claims, further comprising:
a power supply unit (220) which is arranged in the housing (222) and which is configured to supply the sensor unit (212) and the evaluation unit (216) with electrical power.

14. Radar sensor (210) according to any one of the preceding claims, further comprising:
a release device (240) disposed on the housing (222) for non-destructively releasing the radar sensor (210) from the container wall (140).

15. Sensor arrangement (200), comprising:
a radar sensor (210) according to any one of the preceding claims; and
a container (120) having a container wall (140);
wherein the radar sensor (210) is arranged with the adhesive surface (226) on the outside of the container wall so that the housing portion (224) of the radar sensor is arranged opposite to the container wall (140); and
wherein the sealing surface (228) of the radar sensor is arranged at least partially between the housing (222) of the radar sensor and the container wall (140), in particular between a part of the housing portion (224) and the container wall (140).

## Revendications

1. Capteur radar (210) pour mesurer un niveau de remplissage et/ou un niveau limite d'un produit de remplissage dans un contenant (120), le capteur radar (210) comprenant :
une unité de détection (212) pour émettre et/ou recevoir un signal radar ;
une unité d'évaluation (216) pour déterminer, sur la base du signal radar, un signal de mesure en corrélation avec le niveau de remplissage et/ou le niveau limite
un boîtier (222) ayant au moins une partie de boîtier (224) conçue pour être disposée en face d'une paroi (140) du contenant (120) pour mesurer le niveau de remplissage et/ou le niveau limite ;
la partie du boîtier (224) étant configurée de telle sorte que le signal radar est transmissible à travers la partie du boîtier (224) ;
dans lequel une surface adhésive (226) avec un matériau adhésif (227) est disposée sur un côté extérieur du boîtier (222) au moins le long d'une partie d'une circonférence extérieure de la zone du boîtier (224), la surface adhésive étant conçue pour le montage du capteur radar (210) sur la paroi (140) du contenant (120) ;
dans lequel une surface d'étanchéité (228) avec un matériau d'étanchéité (229) est disposée sur un côté extérieur du boîtier (222) au moins le long d'une partie de la circonférence extérieure de la zone du boîtier (224), la surface d'étanchéité (228) étant conçue pour étancher au moins partiellement la partie du boîtier (224) lorsque le capteur radar (210) est monté sur la paroi du contenant (140) ; et
dans lequel l'unité de détection est configurée pour émettre et/ou recevoir le signal radar à travers la région du boîtier.

2. Capteur radar (210) selon l'une des revendications précédentes,
dans lequel la surface adhésive (226) et/ou la surface d'étanchéité (228) entoure complètement la partie du boîtier (224) le long de la périphérie extérieure de la partie du boîtier.

3. Capteur radar (210) selon l'une des revendications précédentes,
dans lequel la surface adhésive (226) entoure au moins partiellement, en particulier complètement, la surface d'étanchéité (228).

4. Capteur radar (210) selon l'une des revendications précédentes,
dans lequel la surface d'étanchéité (228) est plane ; et/ou
dans lequel la surface d'étanchéité (228) recouvre au moins partiellement la partie du boitier (224) de manière plane.

5. Capteur radar (210) selon l'une des revendications précédentes,
dans lequel le matériau d'étanchéité (229) de la surface d'étanchéité (228) est fourni par le matériau adhésif (227) de la surface adhésive (226) ; et/ou
dans lequel la surface adhésive (226) et la surface d'étanchéité (228) sont formées d'une seule pièce.

6. Capteur radar (210) selon l'une des revendications 1 à 4,
dans lequel le matériau adhésif (227) est différent du matériau d'étanchéité (229).

7. Capteur radar (210) selon l'une des revendications précédentes,
dans lequel la surface adhésive (226) et/ou la surface d'étanchéité (228) comprend, au moins en partie, un adhésif acrylique, en particulier un ruban adhésif acrylique.

8. Capteur radar (210) selon l'une des revendications précédentes,
dans lequel le matériau adhésif (227) et/ou le matériau d'étanchéité (229) a une permittivité relative de 1,5 à 3.

9. Capteur radar (210) selon l'une des revendications précédentes,
dans lequel le boîtier (222) entoure complètement et/ou de manière permanente l'unité de détection (212) et l'unité d'évaluation (216).

10. Capteur radar (210) selon l'une des revendications précédentes,
Dans lequel le boîtier (222) est complètement fermé ; et/ou
dans lequel le boîtier (222) enferme hermétiquement l'unité de détection (212) et l'unité d'évaluation (216), en particulier de manière étanche à la poussière, à l'eau et/ou à l'air.

11. Capteur radar (210) selon l'une des revendications précédentes,
dans lequel le capteur radar est conçu entièrement sans fil vers l'extérieur ; et/ou
dans lequel le boîtier (222) n'a pas de passage de câble.

12. Capteur radar (210) selon l'une des revendications précédentes, comprenant en outre
une unité de communication (218) qui est disposée dans le boîtier (222) et qui est configurée pour transmettre le signal de mesure et/ou une valeur de mesure en corrélation avec le signal de mesure à travers le boîtier (222) vers un récepteur.

13. Capteur radar (210) selon l'une des revendications précédentes, comprenant en outre
un bloc d'alimentation (220) qui est disposé dans le boîtier (222) et qui est conçu pour alimenter en courant électrique l'unité de détection (212) et l'unité d'évaluation (216).

14. Capteur radar (210) selon l'une des revendications précédentes, comprenant en outre
un dispositif de détachement (240) disposé sur le boîtier (222) pour détacher de manière non destructive le capteur radar (210) de la paroi du contenant (140).

15. Arrangement de capteurs (200), comprenant :
un capteur radar (210) selon l'une des revendications précédentes ; et
un contenant (120) ayant une paroi de contenant (140) ;
dans lequel le capteur radar (210) est disposé avec la surface adhésive (226) sur l'extérieur de la paroi du contenant de sorte que la partie de boîtier (224) du capteur radar est disposée à l'opposé de la paroi du contenant (140) ; et
dans lequel la surface d'étanchéité (228) du capteur radar est disposée au moins partiellement entre le boîtier (222) du capteur radar et la paroi (140) du contenant, en particulier entre une partie de la partie du boîtier (224) et la paroi (140) du contenant.
